# EUROPEAN PATENT SPECIFICATION

(11) **EP 2 928 670 B1**
(45) Date of publication and mention of the grant of the patent: **25.05.2016**
(21) Application number: 13817658.1
(22) Date of filing: 05.12.2013
(51) Int. Cl.: B29C 67/00

(54) **SYSTEMS AND METHODS OF CONTROLLING A TEMPERATURE DIFFERENTIAL IN THE MANUFACTURE OF OBJECTS**
SYSTEME UND VERFAHREN ZUR STEUERUNG VON TEMPERATURUNTERSCHIEDEN BEI DER HERSTELLUNG VON GEGENSTÄNDEN
SYSTÈMES ET PROCÉDÉS DE COMMANDE D'UN DIFFÉRENTIEL DE TEMPÉRATURE DANS LA FABRICATION D'OBJETS

(30) Priority: 06.12.2012 US 201261734312 P
(43) Date of publication of application: 14.10.2015
(73) Proprietor: Materialise N.V., 3001 Leuven (BE)
(72) Inventor: ROELS, Toon, B-3001 Leuven (BE)
(74) Representative: DeltaPatents B.V.
(86) International application number: PCT/EP2013/075713
(87) International publication number: WO 2014/086943

(56) References cited:
- WO-A1-2009/048330
- KR-B1- 100 837 109
- US-A- 5 569 349

## Description

### BACKGROUND OF THE INVENTION

### Field of the Invention

The present application relates generally to systems, methods, and devices for manufacturing objects, and more specifically to controlling a temperature differential between a first temperature and a second temperature in the generation of a three-dimensional object.

### Description of the Related Technology

Object design and manufacture processes are used to create tools for a number of different industries. For example, parts, tools, etc. may be designed and manufactured for use in all aspects of everyday life. The process of designing and manufacturing such objects, however, can be time intensive and expensive. For example, traditional manufacturing techniques may require designing and building a prototype, creating molds based on the prototype, drilling and cutting of components, and other time consuming and expensive processes to create a single object. There may be economies of scale when making subsequent objects identical to the initially designed object because molds and tooling, etc. can be reused. However, for one-off objects, no such economies of scale are realized.

Accordingly, traditional manufacturing techniques are ill-suited for generating one-off or customized objects, such as, for example, surgical implants specifically designed for a patient, prototypes, etc. Processes such as additive manufacturing (e.g., 3-D printing) can overcome limitations of traditional manufacturing techniques by reducing the time and cost of creating an object. Additive manufacturing includes a group of techniques used to fabricate a tangible model of an object typically using three-dimensional (3-D) computer aided design (CAD) data of the object. Additive manufacturing techniques may include stereolithography, Selective Laser Sintering, Fused Deposition Modeling, foil-based techniques, etc. US 5569349 discloses an apparatus and method of forming objects out of building material, wich is normally solid, but flowable when heated.

Errors may occur in the manufacture of objects using additive manufacturing techniques due to, for example, excess air being entrapped in the material used to create the object. For example, air bubbles in a resin used in a stereolithography process may lead to visibly entrapped bubbles in the resulting object. Accordingly, improved systems and methods are needed for manufacturing objects, devices, or other products using additive manufacturing techniques.

### SUMMARY

The present application relates generally to controlling a temperature differential in the manufacture or generation of objects. Details of one or more implementations of the subject matter described in this specification are set forth in the accompanying drawings and the description below. Other features, aspects, and advantages will become apparent from the description, the drawings, and the claims.

One aspect of the subject matter described in this disclosure provides a method of controlling a temperature differential between a first temperature and a second temperature in the generation of a three-dimensional object according to appended claim 1. The method includes heating a volume of liquid in a reservoir to the first temperature and controlling a transfer of a portion of the volume of liquid from the reservoir to an object coater head so that the portion of the volume of liquid is at the second temperature when the portion of the volume of liquid is deposited from the object coater head. The method further includes depositing the portion of the volume of liquid on one of a support and an already formed part of the three-dimensional object. The method further includes controlling a transfer time for transferring the portion of the volume of liquid to the object coater head to allow the portion of the volume of liquid to be cooled to the second temperature. The three-dimensional object is generated layer by layer by depositing successive layers of the liquid on one of the building area support and the already formed part of the three-dimensional object. The portion of the volume of liquid is deposited from the object coater head to the at least one of the building area support and the already formed part of the three-dimensional object.

Another aspect of the subject matter described in this disclosure provides an apparatus for generating a three-dimensional object according to appended claim 6. The apparatus includes a reservoir comprising a volume of liquid and an object coater head configured to deposit a portion of the volume of liquid on one of a support and an already formed part of the three-dimensional object. The apparatus further includes a heating source configured to heat the volume of liquid in the reservoir to a first temperature and a device configured to control a transfer of a portion of the volume of liquid from the reservoir to the object coater head so that the portion of the volume of liquid is at a second temperature when the portion of the volume of liquid is deposited from the object coater head, wherein the first temperature is higher than the second temperature. A temperature differential between the first temperature and the second temperature is controllable to increase the ability of the volume of liquid to dissolve air prior to being deposited from the object coater head. The controller is further configured to control a transfer time for transferring the portion of the volume of liquid to the object coater head to allow the portion of the volume of liquid to be cooled to the second temperature. The object coater head is configured to generate the three-dimensional object layer by layer by depositing successive layers of the liquid on one of the building area support and the already formed part of the three-dimensional object.

Another aspect of the subject matter described in this disclosure provides an apparatus for generating a three-dimensional object. The apparatus includes a reservoir comprising a volume of liquid and means for depositing a portion of the volume of liquid on one of a support and an already formed part of the three-dimensional object. The apparatus further includes means for heating the volume of liquid in the reservoir to a first temperature and means for controlling a transfer of a portion of the volume of liquid from the reservoir to the object coater head so that the portion of the volume of liquid is at a second temperature when the portion of the volume of liquid is deposited from the object coater head.

Another aspect of the subject matter described in this disclosure provides a computer program product including a computer-readable medium. The computer-readable medium includes code for causing a computer to deposit a portion of the volume of liquid from a reservoir on one of a support and an already formed part of a three-dimensional object. The computer-readable medium further includes code for causing a computer to heat the volume of liquid in the reservoir to a first temperature and code for causing a computer to control a transfer of a portion of the volume of liquid from the reservoir to the object coater head so that the portion of the volume of liquid is at a second temperature when the portion of the volume of liquid is deposited from the object coater head.

### BRIEF DESCRIPTION OF THE DRAWINGS

The following description of the figures is merely exemplary in nature and is not intended to limit the present teachings, their application or uses. Throughout the drawings, corresponding reference numerals indicate like or corresponding parts and features. Note that the relative dimensions of the following figures may not be drawn to scale.
FIG. 1 depicts one example of a system for designing and manufacturing objects.
FIG. 2 depicts a functional block diagram of one example of a computer of FIG. 1.
FIG. 3 depicts a process for manufacturing a three-dimensional object.
FIG. 4 depicts an exemplary additive manufacturing device for generating a three-dimensional object.
FIG. 5 depicts a schematic diagram illustrating resin transport from a reservoir to a building area.
FIG. 6 depicts a process of controlling a temperature differential between a first temperature and a second temperature in the generation of a three-dimensional object.
FIG. 7 depicts a functional block diagram of an exemplary apparatus for generating a three-dimensional object.

### DETAILED DESCRIPTION

The following detailed description is directed to certain specific embodiments. However, the teachings herein can be applied in a multitude of different ways. In this description, reference is made to the drawings wherein like parts are designated with like numerals throughout.

The present invention will be described with respect to particular embodiments but the invention is not limited thereto but only by the claims.

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps. The terms "comprising", "comprises" and "comprised of' when referring to recited components, elements or method steps also include embodiments which "consist of' said recited components, elements or method steps.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrates herein.

Terms such as "about," "around," "approximately," or "substantially" as used herein when referring to a measurable value such as a parameter, an amount, a temporal duration, and the like, is meant to encompass variations of +/-10% or less, preferably +/-5% or less, more preferably +1/-1% or less, and still more preferably +1/-0.1% or less of and from the specified value, insofar as such variations are appropriate to perform in the disclosed invention. It is to be understood that the value to which the modifier "about" refers is itself also specifically, and preferably, disclosed. The recitation of numerical ranges by endpoints includes all numbers and fractions subsumed within the respective ranges, as well as the recited endpoints.

The present application relates to the manufacturing of three-dimensional (3-D) objects using additive manufacturing techniques, such as stereolithography. Details relating to specific additive manufacturing techniques will be discussed further below. Manufacturing objects using additive manufacturing may cause defects to occur in the resulting object due to excess air being entrapped in the material used to create the object. For example, air bubbles in a resin used in the stereolithography process may lead to visibly entrapped bubbles in the resulting object. The manufacture of objects with defects such as these may lead to wasted materials and time, and ultimately to a loss of revenue for manufacturers. Accordingly, systems and methods described herein allow for improved manufacturing of 3-D objects, devices, or other products using additive manufacturing techniques by controlling a temperature differential between a first temperature and a second temperature in the manufacturing process.

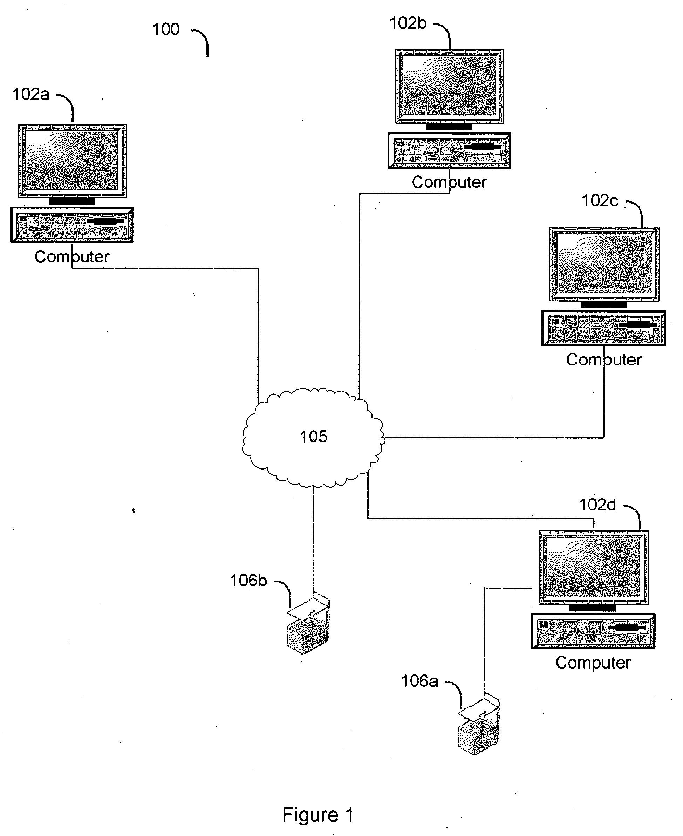

FIG. 1 depicts one example of a system 100 for designing and manufacturing 3-D objects. The system 100 is configured to support the techniques described herein. For example, the system 100 may be configured to design and generate an object using additive manufacturing techniques, as described in further detail below. The system 100 includes one or more computers 102a-102d, which can be, for example, any workstation, server, or other computing device capable of processing information. In some aspects, each of the computers 102a-102d can be connected, by any suitable communications technology (e.g., an internet protocol), to a network 105 (e.g., the Internet). Accordingly, the computers 102a-102d may transmit and receive information (e.g., software, digital representations of 3-D objects, commands or instructions to operate an additive manufacturing device, etc.) between each other via the network 105. The system 100 further includes one or more additive manufacturing devices (e.g., 3-D printers, stereolithography apparatus, etc.) 106a-106b. As shown the additive manufacturing device 106a is directly connected to a computer 102d (and through computer 102d connected to computers 102a-102c via the network 105) and additive manufacturing device 106b is connected to the computers 102a-102d via the network 105. Accordingly, one of skill in the art will understand that an additive manufacturing device 106 may be directly connected to a computer 102, connected to a computer 102 via a network 105, and/or connected to a computer 102 via another computer 102 and the network 105.

It should be noted that though the system 100 is described with respect to a network and one or more computers, the techniques described herein also apply to a single computer 102, which may be directly connected to an additive manufacturing device 106.

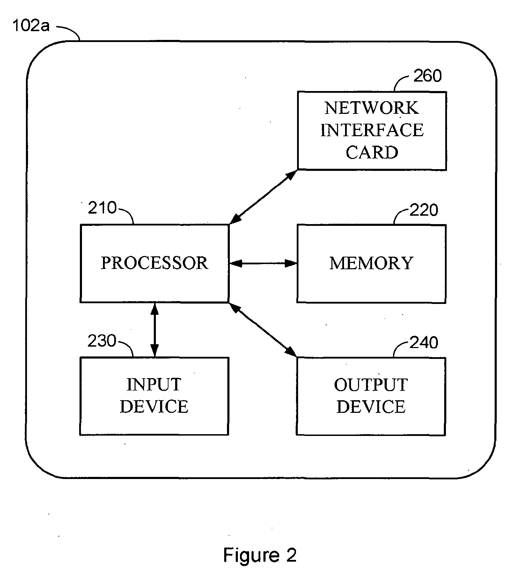

FIG. 2 illustrates a functional block diagram of one example of a computer 102a of FIG. 1. The computer 102a includes a processor 210 in data communication with a memory 220, an input device 230, and an output device 240. In some embodiments, the processor is further in data communication with an optional network interface card 260. Although described separately, it is to be appreciated that functional blocks described with respect to the computer 102a need not be separate structural elements. For example, the processor 210 and memory 220 may be embodied in a single chip.

The processor 210 can be a general purpose processor, a digital signal processor (DSP), an application specific integrated circuit (ASIC), a field programmable gate array (FPGA) or other programmable logic device, discrete gate or transistor logic, discrete hardware components, or any suitable combination thereof designed to perform the functions described herein: A processor may also be implemented as a combination of computing devices, e.g., a combination of a DSP and a microprocessor, a plurality of microprocessors, one or more microprocessors in conjunction with a DSP core, or any other such configuration.

The processor 210 can be coupled, via one or more buses, to read information from or write information to memory 220. The processor may additionally, or in the alternative, contain memory, such as processor registers. The memory 220 can include processor cache, including a multi-level hierarchical cache in which different levels have different capacities and access speeds. The memory 220 can also include random access memory (RAM), other volatile storage devices, or non-volatile storage devices. The storage can include hard drives, optical discs, such as compact discs (CDs) or digital video discs (DVDs), flash memory, floppy discs, magnetic tape, and Zip drives.

The processor 210 also may be coupled to an input device 230 and an output device 240 for, respectively, receiving input from and providing output to a user of the computer 102a. Suitable input devices include, but are not limited to, a keyboard, a rollerball, buttons, keys, switches, a pointing device, a mouse, a joystick, a remote control, an infrared detector, a voice recognition system, a bar code reader, a scanner, a video camera (possibly coupled with video processing software to, e.g., detect hand gestures or facial gestures), a motion detector, a microphone (possibly coupled to audio processing software to, e.g., detect voice commands), or other device capable of transmitting information from a user to a computer. The input device can also be a touch screen associated with the display, in which case a user responds to prompts on the display by touching the screen. The user may enter textual information through the input device such as the keyboard or the touch-screen. Suitable output devices include, but are not limited to, visual output devices, including displays and printers, audio output devices, including speakers, headphones, earphones, and alarms, additive manufacturing devices, and haptic output devices.

The processor 210 further may be coupled to a network interface card 260. The network interface card 260 prepares data generated by the processor 210 for transmission via a network according to one or more data transmission protocols. The network interface card 260 also decodes data received via a network according to one or more data transmission protocols. The network interface card 260 can include a transmitter, receiver, or both. In other embodiments, the transmitter and receiver can be two separate components. The network interface card 260, can be embodied as a general purpose processor, a digital signal processor (DSP), an application specific integrated circuit (ASIC), a field programmable gate array (FPGA) or other programmable logic device, discrete gate or transistor logic, discrete hardware components, or any suitable combination thereof designed to perform the functions described herein.

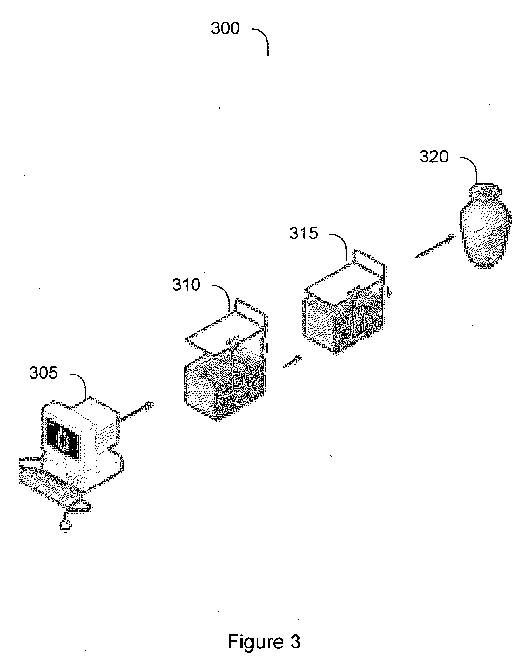

FIG. 3 illustrates a process 300 for manufacturing a 3-D object or device. As shown, at a step 305, a digital representation of the object is designed using a computer, such as the computer 102a in FIG. 1. For example, 2-D or 3-D data may be input to the computer 102a for aiding in designing the digital representation of the 3-D object. Continuing at a step 310, information is sent from the computer 102a to an additive manufacturing device, such as additive manufacturing device 106 in FIG. 1. At a step 315, the additive manufacturing device 106 begins manufacturing the 3-D object using suitable materials, such as a liquid resin. Suitable materials include, but are not limited to a photopolymer resin, polyurethane, methyl methacrylate-acrylonitrile-butadiene-styrene copolymer, resorbable materials such as polymer-ceramic composites, etc. Examples of commercially available materials are: DSM Somos® series of materials 7100, 8100, 9100, 9420, 10100, 11100, 12110, 14120 and 15100 from DSM Somos; ABSplus-P430, ABSi, ABS-ESD7, ABS-M30, ABS-M30i, PC-ABS, PC-ISO, PC, ULTEM 9085, PPSF and PPSU materials from Stratasys; Accura Plastic, DuraForm, CastForm, Laserform and VisiJet line of materials from 3-Systems; the PA line of materials, PrimeCast and PrimePart materials and Alumide and CarbonMide from EOS GmbH. The VisiJet line of materials from 3-Systems may include Visijet Flex, Visijet Tough, Visijet Clear, Visijet HiTemp, Visijet e-stone, Visijet Black, Visijet Jewel, Visijet FTI, etc. Examples of other materials may include Objet materials, such as Objet Fullcure, Objet Veroclear, Objet Digital Materials, Objet Duruswhite, Objet Tangoblack, Objet Tangoplus, Objet Tangoblackplus, etc. Another example of materials may include materials from the Renshape 5000 and 7800 series. Further, at a step 320, the 3-D object is generated.

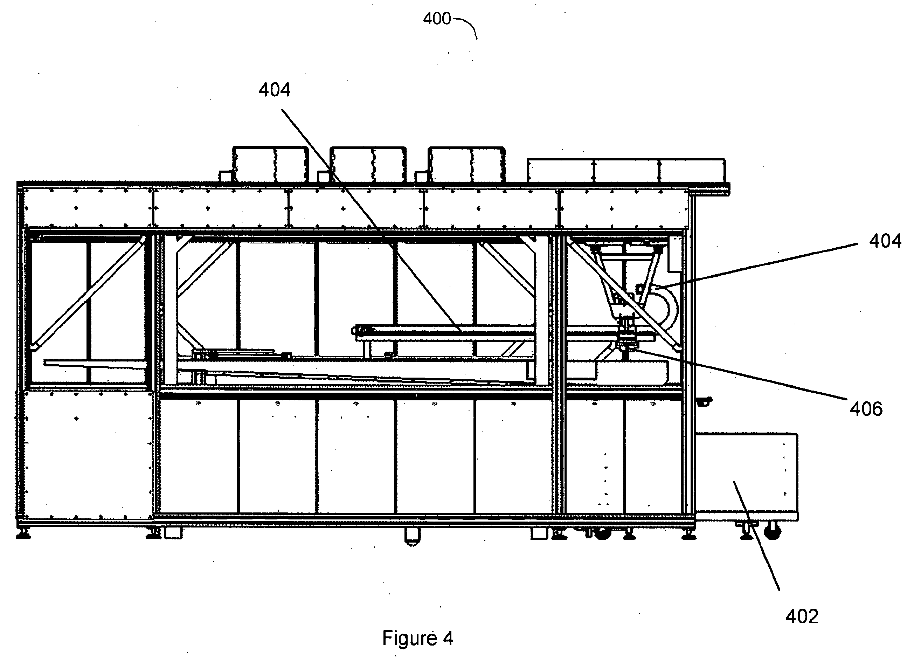

FIG. 4 illustrates an exemplary additive manufacturing apparatus 400 for generating a three-dimensional (3-D) object. For example, the additive manufacturing apparatus 400 may include a stereolithography apparatus. The additive manufacturing apparatus 400 includes a reservoir 402 that may hold a volume of liquid, such as a resin used to build the 3-D object. The additive manufacturing apparatus 400 further includes a transport system 404 that may be used to transport the liquid from the reservoir 402 to an object coater head 406. For example, the transport system may include one or more tubes, pipes, or hoses configured to transport the liquid from the reservoir 402. In some aspects, the transport system 404 may include metal or plastic materials, such as ultra-high molecular weight polyethylene (UHMWPE), polyacrylate (PA), polyvinyl chloride (PVC), or any other suitable material. In some aspects, the additive manufacturing apparatus 400 may include a guiding structure in the reservoir 402 configured to guide a flow of the liquid from the reservoir 402 to the transport system 404. For example, the structure may include a series of tubes or plates that are placed to strategically direct the flow of the liquid to the transport system 404. The additive manufacturing apparatus 400 also includes a building area where the liquid resin is deposited. The building area includes a building area support upon which the 3-D object is built.

The additive manufacturing apparatus 400 further includes a light source for polymerizing the liquid to form the 3-D object. For example, the light source may include an electromagnetic light source, such as a ultra-violet (UV) light source, an infrared (IR) light source, or any type of laser beam capable of solidifying the liquid. One skilled in the art will understand that any light source operable to polymerize a liquid resin may be used as the light source.

In some aspects, the additive manufacturing apparatus 400 may include at least one pump used to pump the liquid from the reservoir 402 to the object coater head 406. For example, a positive displacement pump and/or a centrifugal-type pump may be used. In some aspects, the pump may include a filter unit to add further filtration to the liquid resin prior to being deposited to the building area. In some aspects, the pump may provide a defined flow (e.g., 0.5-40 liters/min) that may be fixed or regulated via an active feedback loop. For example, the feedback loop may be direct based upon flow measurements. As another example, the feedback may be indirect using measurements of the thickness of the layers being deposited in the additive manufacturing process.

The additive manufacturing apparatus 400 may be used to generate one or more 3-D objects layer by layer. In some aspects, the additive manufacturing apparatus 400 may include a curtain coating stereolithography machine. The stereolithography machine, for example, may utilize a liquid resin (e.g., a photopolymer resin) to build an object a layer at a time, such as by depositing the resin from the object coater head 406 in the form of a curtain. For example, the object coater head 406 may deposit successive layers of the liquid resin on either the building area support or an already formed part of the 3-D object. For example, the first layer of the 3-D object may be deposited on the building area support, and each successive layer may be deposited on the preceding layer of the 3-D object. On each layer, the light source, such as one or several electromagnetic light sources that may be controlled by a computer, may be used to trace a specific pattern on the surface of the liquid resin to form the dimensions of the 3-D object. Exposure to the light source polymerizes, cures, or solidifies the pattern traced on the resin and adheres it to the layer below. After a coat has been polymerized, the building area support may descend by a single layer thickness and a subsequent layer pattern is traced and is adhered to the previous layer. The building process is complete when the 3-D object is formed by depositing all layers of the 3-D object.

The stereolithography additive manufacturing technique described above may start from a digital representation of the 3-D object to be formed. The digital representation may be sliced into a series of cross-sectional layers that may be overlaid to form the object as a whole. The additive manufacturing apparatus 400 may then use this data for building the object on a layer-by-layer basis. The cross-sectional data representing the layer data of the 3-D object may be generated using a computer system and computer aided design and manufacturing (CAD/CAM) software.

Referring again to FIG. 4, the reservoir 402 may include a volume, of liquid, such as a liquid resin. In some aspects, the minimum quantity of liquid resin included in the reservoir 402 is the volume needed to fill the build area plus the volume needed to fill the transport system 404. The volume may vary depending on the size of the reservoir 402 and the 3-D object that is to be built. For example, the volume of liquid in the reservoir 402 may be anywhere from I liter up to 2000 liters. In some aspects, the reservoir 402 may be full at the start of the stereolithography building process. The liquid resin is transported towards the building area via the transport system 404 and is deposited onto to the building area (e.g., in the form of a curtain). Accordingly, there may be a proportionally smaller amount of resin in the reservoir 402 as the building process progresses. As described further below, excess liquid resin may be present during and/or after the building process. For example, a portion of the deposited liquid resin may not be used in creating the pattern of the 3-D object. As another example, a portion of excess resin may be deposited outside of the building area. The additive manufacturing apparatus 400 may be configured to transport this excess liquid resin back to the resin reservoir 402 during or after the building process.

The shape of reservoir 402 may be any shape. In some aspects, reservoir 402 may have a profiled bottom that is inclined to the point where the resin is sent to the transport system 404. In some aspects, the reservoir 402 may include one or more sensors, such as temperature sensors, volume sensors, etc. In some aspects, the reservoir 402 may include one or more drain pipes that may be used to empty the reservoir 402.

As described above, a volume of the liquid resin may sit in the reservoir 402 and may be transported via the transport system 404 towards the object coater head 406. The object coater head 406 may be configured to move over the building area support in a relative manner to the 3-D object being generated. As liquid resin exits the object coater head 406, the resin may be deposited (e.g., as a curtain) onto the building area, such as the building area support or a preceding layer of the 3-D object. The resin may remain in the building area until the end of the building process. A portion of the liquid resin that is deposited to the building area may be polymerized due to application of the light source to the resin. In some aspects, there may be a portion of the liquid resin that is unpolymerized during the building process. For example, excess resin that is not used in the traced pattern for the 3-D object will remain unpolymerized. In some aspects, the unpolymerized liquid resin may flow back into the reservoir 402 at the end of the build process, such as by lifting the bottom of the building area support.

In some aspects, the object coater head 406 may be wider than the actual building area. In such aspects, a portion of the liquid resin may not be deposited into the building area, and may instead be deposited to the outside of the building area. In such aspects, the additive manufacturing apparatus 400 may include one or more side trays configured to receive the resin that is deposited outside the building area and to return the liquid resin back to the reservoir 402. In some aspects, the side trays may be configured to return the liquid resin back to the reservoir 402 immediately upon receiving the resin. In some aspects, the side trays may be configured to hold the liquid resin until the end of the build process. In some aspects, the additive manufacturing apparatus 400 may include one or more filters configured to filter the resin that is returned to the reservoir in order to remove any impurities that may have entered the resin during the building process.

The object coater head 406 may include a chamber and an exit die. The chamber may be a single chamber or a multi-cavity chamber. The exit die width may be adjustable or fixed. The object coater head 406 may be positioned at a defined height above the building area, which determines the length of the liquid curtain and the velocity of the falling resin. The height may be determined based on the particular 3-D object being built, the time the build will take, the minimum amount of defects that may be included in the 3-D object, etc. The speed at which the object coater head 406 moves may be determined by the desired layer thickness. For example, the speed of the object coater head 406 may increase as the required thickness of each layer decreases. In some aspects, the object coater head 406 may be heated, may be cooled, or may be kept at an ambient temperature.

Using the additive manufacturing techniques described above to manufacture 3-D objects may cause defects or errors to occur in the objects due to excess air being entrapped in the liquid resin. For example, air bubbles in the liquid resin used in the stereolithography process may lead to visibly entrapped air bubbles in the resulting object. The air to resin contact inherent in additive manufacturing techniques, such as the curtain coating stereolithography described above, leads to absorption of air in at least two forms, including air being dissolved into the liquid resin and the formation of air bubbles in the resin due to undissolved air. The air that is dissolved in the liquid resin is not visible as an air bubble. However, the amount of air that can be carried by, or dissolved into, a liquid is limited up to its maximum dissolution amount. Accordingly, the resin may become completely saturated with dissolved air once its maximum dissolution amount is reached. Once the resin becomes completely saturated with dissolved air, air bubbles begin to form in the liquid resin.

The amount of dissolved air in the liquid resin is a factor of the chemical nature of the specific type of liquid, the pressure under which the liquid is kept, and the temperature at which the liquid is kept. A liquid at a higher temperature can carry less dissolved gas than the same liquid at a lower temperature. As a result, the concentration of dissolved gases in the liquid lowers as the temperature of the liquid increases. Accordingly, more air will escape from the liquid as the temperature of the liquid increases.

There are various phases in the additive manufacturing process in which the total amount of gas, including dissolved and undissolved gas, can change. A first phase in which the total amount of gas may change is when the liquid resin is in the reservoir 402. For example, prior to the start of the flow of the liquid resin from the reservoir 402, the resin may not have been circulating for a period of time and may be completely free of air bubbles. The resin may be saturated with an amount of dissolved air. A second phase during the additive manufacturing process is when the liquid resin begins to flow from the reservoir 402 via the transport system 404. If the transport of the liquid resin occurs in an air tight circuit, the resin will reach the object coater head 406 with the same amount of dissolved air and will not have the ability to absorb extra air because it is saturated.

A third phase is when the resin is deposited (e.g., in the form of a curtain) onto a building area, such as the building area support or a preceding layer of the 3-D object. During this deposition phase, air may become entrapped as the liquid resin enters the impingement zone. This air cannot be absorbed into the liquid resin at this point because the resin is already saturated. Accordingly, the air causes one or more air bubbles to be formed in the top layer of the liquid that is in the building area at that time. These bubbles may begin to escape as smaller bubbles begin to grow into bigger bubbles, which may move to the surface and collapse. The speed at which these air bubbles escape may be determined by the surface tension of the liquid, the viscosity of the liquid, and time for which the bubbles have to escape. However, the light source may begin to polymerize the liquid resin before the last bubble has escaped. As a result, the air bubbles may become visibly entrapped in the 3-D object.

Another phase of the additive manufacturing process is when excess resin, such as the resin deposited outside of the building area and/or the resin that is not used in the formation of the 3-D object, is transferred back to the reservoir 402. The excess resin will also include not only the maximum amount of dissolved air, but will also include one or more air bubbles due to the deposition of the resin to the building area and the transport of the resin to the reservoir 402. The continuous transport of liquid from the reservoir 402 to the building area and then back to the reservoir 402 may lead to a situation where the liquid resin in the reservoir 402 is not only saturated with dissolved air, but is also filled with a considerable amount of air bubbles. The increasing amount of air bubbles may lead to the manufacture of defective objects that include numerous air bubbles built into the object.

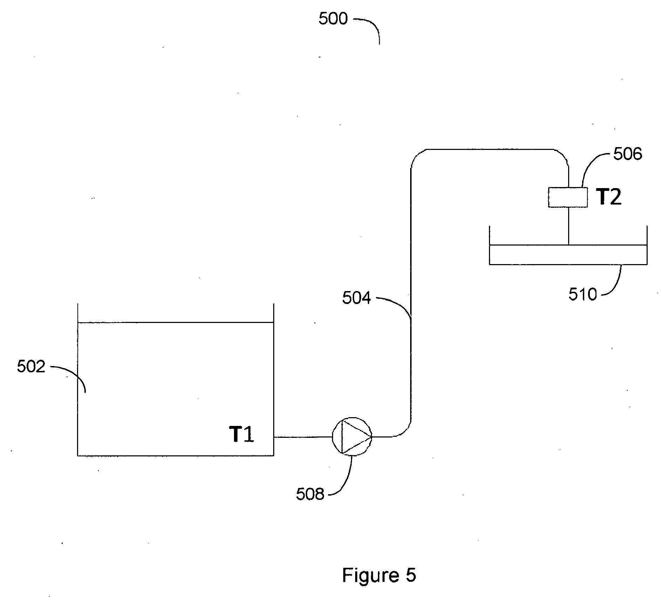

Accordingly, as disclosed herein, a temperature differential or gradient may be established, controlled, and maximized in the liquid resin transfer system in order to increase the ability of the volume of liquid to dissolve more air prior to being deposited from the object coater head 406. As a result, 3-D objects may be generated with little or no air entrapment defects. FIG. 5 illustrates a schematic diagram illustrating the transport of the liquid resin from the reservoir 502 to the building area 510. The additive manufacturing apparatus 500 may further include the components illustrated in FIG. 4 and discussed above, which may not be shown in FIG. 5.

The additive manufacturing apparatus 500 includes a heating source configured to heat the volume of liquid in the reservoir 502. The heating source may be configured to heat the volume of liquid in the reservoir 502 to a first temperature (T1). For example, T1 may be greater than room temperature, but less than the temperature at which the resin gets damaged (T_{damage}). T_{damage} may depend on the type of liquid resin being used, and may occur around 37-40° C. In some aspects, the heating source may include an electrical heating wire that is placed directly in the liquid resin. The heating source may alternatively include a heating pipe circuit with a heating liquid (e.g., water, oil, etc.) that is placed directly in the liquid resin. Another example may include heating the liquid resin from outside the reservoir 502 using a heating medium (e.g., an electric coil, a tube with heated water or oil, etc.) wrapped around one or more outer sides of the reservoir 502. In some aspects, the heating element may include an external double heating mantle with a heating medium. In some aspects, the heating element may include a combination of one or more of the above heating sources.

In some aspects, the reservoir 502 may include a guiding structure that is configured to guide a flow of the liquid from the reservoir 502 to the object coater head 506. The guiding structure may include one or more metal or plastic plates that are used to force the resin to follow a certain path or paths. For example, one or more plates may be positioned horizontally and/or vertically to strategically guide a flow of the liquid resin through the reservoir 502 to the transport system 504. For example, the plates may be designed to create an indirect flow path for increasing the residence time the liquid resin remains in reservoir 502. The plates may also be included in the reservoir 502 to separate the area where the resin is fed into the container from the area where resin is pumped away to the transport system 504 in order to further increase the residence time of the liquid resin in the reservoir 502. The indirect flow path and separate areas may give the resin sufficient time to become heated to T1and thus release more air from the resin.

In some aspects, the guiding structure may include one or more plates designed to prevent the liquid resin from falling onto the resin surface and creating turbulence in the reservoir 502, which may cause air bubbles to be formed. For example, resin returning to the reservoir 502 may be guided into the reservoir 502 using the plates. Air bubbles caused by resin falling on the surface may cause more defects in the 3-D object when the reservoir 502 is almost empty at the end of the building process. By preventing the liquid resin from falling onto the resin surface, the plates may be used to prevent air bubbles from forming and thus further prevent defects from forming in the 3-D object.

In some aspects, the transport system 504 and the object coater head 506 are not heated so that the liquid resin may gradually cool to a lower temperature (T2) at the time of deposition from the object coater head 506. The additive manufacturing apparatus 500 may be designed to control and maximize the temperature differential or gradient (ΔT) between T1 and T2 to increase the ability of the volume of liquid to dissolve more air upon being deposited from the object coater head 506. In some aspects, T2 may be room temperature. Limits on the temperatures include T_{damage} and the temperature (T_{visco}) at which that resin type becomes too viscous at the object coater head 406.

In order to control and maximize ΔT, the additive manufacturing apparatus 500 includes a device configured to control the transfer of a portion of the volume of liquid from the reservoir 502 to the object coater head 506 so that the portion of the liquid is at T2 when the liquid is deposited from the object coater head 506. In some aspects, the device may include at least one pump 508 that is part of the additive manufacturing apparatus 500. For example, as described above, the pump 508 may be used to pump the liquid from the reservoir 502 to the object coater head 506 for a period of time sufficient to bring the resin to T2. In some aspects, the device may include a controller configured to control an amount of the volume of liquid that flows from the reservoir 502 to the object coater head 506. For example, the controller may be programmed to control the pump 508 to start and stop the flow of the liquid resin so that the resin is at T2 upon reaching the object coater head 506. As another example, the controller may be programmed to restrict the flow of the liquid by controlling the position of one or more plates or valves that can be placed in the path of the liquid, such as in the reservoir 502 and/or the transport system 504. In some aspects, the additive manufacturing apparatus 500 may further include a cooling source configured to actively cool the object coater head 506 to allow the portion of the volume of liquid to be cooled to T2. The cooling source may be used to cool the volume of liquid instead of, or in addition to, letting the liquid resin cool down spontaneously towards T2.

In some aspects, the device that is configured to control the transfer of the liquid may include the guiding structure within the reservoir 502 that is configured to guide a flow of the liquid to the transport system 504. As described above, the guiding structure may include one or more metal or plastic plates that are used to force the resin to follow a certain path or paths. The guiding structure may give the resin sufficient time to become heated to T1 and then subsequently cool in order to increase the ability of the volume of liquid resin to be cooled to T2 upon being deposited from the object coater head 506.

In some aspects, the device that is configured to control the transfer of the liquid may include a combination of the above devices, such as a controller, one or more pumps, and a guiding structure. For example, a computer (e.g., computer 102a) may be in communication with the additive manufacturing apparatus 500 in order to allow a user to program a particular temperature differential into the apparatus 500. The computer may be configured to control the entire additive manufacturing apparatus 500, including heating of the reservoir 502, transport of the liquid to the object coater head 506 via the transport system 504, and deposition of the liquid to the building area 510. In some aspects, the computer may be programmed to automatically adjust the temperature differential and to operate the additive manufacturing apparatus 500 accordingly based on operating conditions, the type of object being manufactured, constraints on the particular object, etc.

Increasing the temperature of the volume of liquid in the reservoir 502 has the advantage of lowering the viscosity of the liquid resin. Lowering the viscosity of the liquid resin accelerates the kinetics of the mechanism favoring the escape of the air bubbles, which allows the air bubbles that are present to escape much quicker than if the liquid resin were kept at a lower temperature. The amount of dissolved gas will be lower at T1 than when unheated. Accordingly, when the liquid resin exits the reservoir 502, the amount of dissolved air in the resin may be lower due to the increased temperature T1 and the amount of air bubbles in the liquid resin may be reduced or eliminated.

The device that is configured to control the transfer of the liquid resin allows the resin to be gradually cooled down to T2 as it is transported towards the object coater head 506. In some aspects, a cooling source, such as the cooling source described above, may be used in addition to the device in order to actively cool the object coater head 506 to bring the liquid resin to T2. By allowing the liquid resin to be cooled from T1 to T2 when the resin reaches the object coater head 506, extra capacity is created in the resin because liquids at lower temperatures are able to carry more dissolved gas than liquids at higher temperatures. Thus, the liquid resin is not saturated with dissolved air when cooled to T2 as the resin reaches the object coater head 506. The extra capacity in the liquid resin allows more air to be dissolved in the resin when exposed to air while exiting the object coater head 506 and thus reduces or eliminates the amount of air bubbles in the liquid resin.

As described above, air may become entrapped in the liquid resin at the point of deposition of the resin from the object coater head 506. If the liquid is not heated, the entrapped air cannot be absorbed into the liquid resin at this point because the resin is already saturated. By heating the resin to T1 in the reservoir 502 and then cooling the resin to T2 as it reaches the object coater head 506, the resin is not saturated and a fraction of the air entrapped in one or more air bubbles can now be absorbed additionally into the resin. As more air is dissolved into the liquid resin, the overall number of air bubbles in the resin is reduced. As a result, the manufactured 3-D object may include fewer or no defects due to air bubbles in the resin.

In some aspects, the additive manufacturing apparatus 500 may include deaerator elements that may allow the air bubbles to escape from the transport system 504. In some aspects, the additive manufacturing apparatus 500 may include pressure sensors, temperature sensors, flow sensors, viscosity sensors, etc. that provide feedback signals in order to allow a computer or a controller to maximize the ΔT.

In some aspects, the additive manufacturing apparatus 500 may include heating elements along the transport system 504 and at the object coater head 506 in order to maintain the high temperature T1 across the entire path that the liquid resin is transported. For example, the additive manufacturing apparatus 500 may include heated and/or insulated tubes and a heated insulated recoater head 506. In such aspects, the resin may be maintained at the temperature T1 as it is transported from the reservoir 502 through the transport system 504, and then cooled to T2 at the object coater head 506, such as using the cooling source. The liquid resin may then be deposited to the building area 510 at T2, which may help to reduce the amount of air bubbles in the deposited liquid resin as described above.

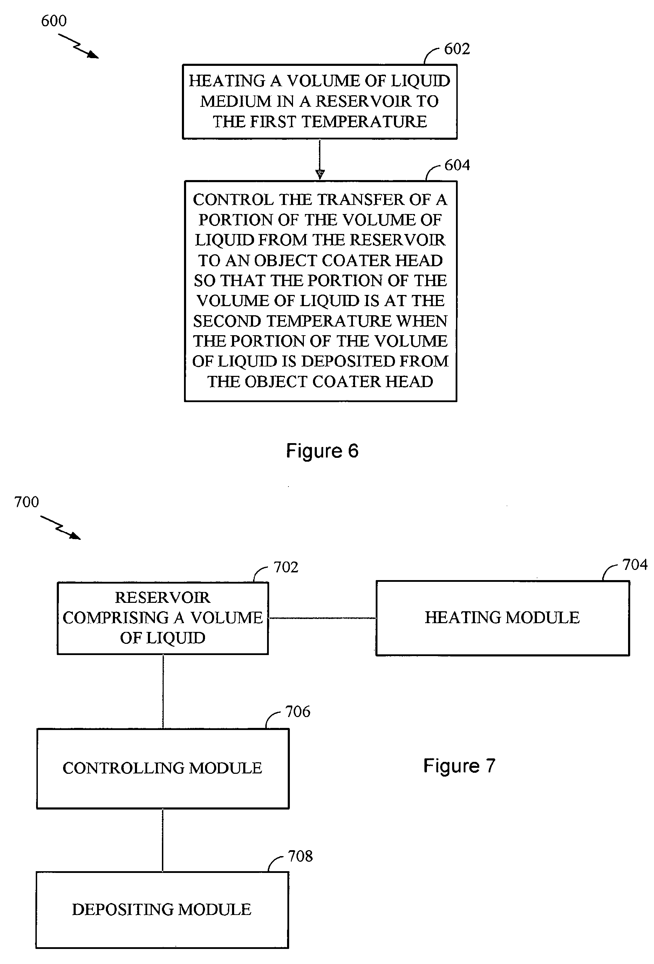

FIG. 6 illustrates an exemplary process of controlling a temperature differential between a first temperature and a second temperature in the generation of a three-dimensional (3-D) object. The process begins at step 602 by heating a volume of liquid in a reservoir to the first temperature. For example, a heating source in the additive manufacturing apparatus 500 may be configured to heat a volume of liquid in the reservoir 502 to a first temperature (T1). At step 604, the process continues by controlling the transfer of a portion of the volume of liquid from the reservoir to an object coater head so that the portion of the volume of liquid is at the second temperature when the portion of the volume of liquid is deposited from the object coater head. The transfer of the portion of the liquid is controlled so that the liquid may gradually cool to a lower temperature (T2) at the time of deposition from the object coater head 506 of the additive manufacturing apparatus 500. In some aspects, the temperature differential between T1 and T2 may be controlled and maximized to increase the ability of the volume of liquid to dissolve more air prior to being deposited from the object coater head. The device is configured to control the transfer of a portion of the volume of liquid from the reservoir 502 to the object coater head 506 so that the portion of the liquid is at T2 when the liquid is deposited from the object coater head 506.

The method includes controlling a transfer time for transferring the portion of the volume of liquid to the object coater head to allow the portion of the volume of liquid to be cooled to the second temperature. For example, referring back to FIG. 5, the transfer time of the liquid resin may be controlled by pumping (e.g., using pump 508) the liquid from the reservoir 502 to the object coater head 506 for a period of time sufficient to bring the resin to the second temperature (T2). As another example, the transfer time may be controlled using a controller configured to control an amount of the volume of liquid that flows from the reservoir 502 to the object coater head 506, such as by controlling a pump to start and stop the flow of the liquid resin so that the resin is at the second temperature (T2). Another example may include a controller programmed to restrict the flow of the liquid by controlling the position of one or more plates or valves that can be placed in the path of the liquid, such as in the reservoir 502 and/or the transport system 504. As a result, the ability of the volume of liquid resin to dissolve more air is increased prior to being deposited from the object coater head 506, which allows the release of more air bubbles from the resin as it is exposed to air.

In some aspects, the method further includes actively cooling the object coater head to allow the portion of the volume of liquid to be cooled to the second temperature (T2). For example, a cooling source may be used to cool the volume of liquid a the object coater head in addition to letting the liquid resin cool down to the second temperature (T2) during transport.

The 3-D object is generated layer by layer by depositing successive layers of the liquid on one of a building area support and an already formed part of the 3-D object. For example, the 3-D object may be generated by a stereolithography apparatus using a stereolithography technique (e.g., curtain coating stereolithography). The portion of the volume of liquid is deposited from the object coater head to the at least one of the building area support and the already formed part of the three-dimensional object. For example, the first layer of the 3-D object may be deposited on the building area support, and each successive layer may be deposited on the preceding layer of the 3-D object. A light source, such as one or several electromagnetic light sources that may be controlled by a computer, may be used to trace a specific pattern on the surface of the liquid resin on each layer to form the dimensions of the 3-D object. Exposure to the light source polymerizes, cures, or solidifies the pattern traced on the resin and adheres it to the layer below. After a coat has been polymerized, the building area support may descend by a single layer thickness and a subsequent layer pattern may be traced and adhered to the previous layer. In some aspects, the object coater head is configured to move in a relative manner in relation to the three-dimensional object.

FIG. 7 illustrates a functional block diagram of an exemplary apparatus 700 for generating a three-dimensional object that may be employed using the additive manufacturing apparatus 400 of FIG. 4 and/or the additive manufacturing apparatus 500 of FIG. 5. The apparatus 700 may include a reservoir 702 comprising a volume of liquid. The reservoir may correspond to reservoir 402 or the reservoir 502. The apparatus 700 may further include a heating module 704 configured to heat the volume of liquid in the reservoir 702 to a first temperature. The heating module 704 may be configured to perform one or more functions discussed above with respect to block 602 of FIG. 6. The heating module 704 may correspond to any of the heating sources described above, including, but not limited to, an electrical heating wire placed directly in the liquid resin, a heating pipe circuit with heating liquid (e.g., water, oil, etc.) placed directly in the liquid resin, a heating medium (e.g., an electric coil, a tube with heated water or oil, etc.) wrapped around one or more outer sides of the reservoir 702, an external double heating mantle with a heating medium, or a combination of one or more of the above heating sources.

The apparatus 700 may include a depositing module 708 configured to deposit a portion of the volume of liquid on one of a building area support and an already formed part of the three-dimensional object. The depositing module 708 may correspond to the object coater head 406 or 506 and may be configured to perform one or more functions discussed above with respect the object coater head 406 or 506.

The apparatus 700 further includes a controlling module 706. The controlling module 706 is configured to control the transfer of a portion of the volume of liquid from the reservoir to the object coater head so that the portion of the volume of liquid is at a second temperature when the portion of the volume of liquid is deposited from the object coater head. The controlling module 706 may also be configured to perform one or more functions discussed above with respect to block 604 of FIG. 6. The controlling module 706 may correspond to any of the devices described above configured to control the transfer of a portion of the volume of liquid from the reservoir to the object coater head so that the portion of the liquid is at the second temperature when the liquid is deposited from the object coater head. For example, the controlling module may correspond to a controller, one or more pumps, and/or a guiding structure.

Moreover, in some aspects, means for depositing a portion of the volume of liquid on one of a building area support and an already formed part of the three-dimensional object may comprise the depositing module 708. In some aspects, means for heating the volume of liquid in the reservoir to a first temperature may comprise the heating module 704. In some aspects, means for controlling the transfer of a portion of the volume of liquid from the reservoir to the object coater head so that the portion of the volume of liquid is at a second temperature when the portion of the volume of liquid is deposited from the object coater head may comprise the controlling module 706.

Moreover, other modules may be included in the wireless device 700 in order to implement the functions discussed above with respect to any of FIGs. 4-6.

The subject-matter of this disclosure is operational with numerous general purpose or special purpose computing system environments or configurations. Examples of well-known computing systems, environments, and/or configurations that may be suitable for use with the invention include, but are not limited to, personal computers, server computers, hand-held or laptop devices, multiprocessor systems, microprocessor-based systems, programmable consumer electronics, network PCs, minicomputers, mainframe computers, distributed computing environments that include any of the above systems or devices, and the like.

As used herein, instructions refer to computer-implemented steps for processing information in the system. Instructions can be implemented in software, firmware or hardware and include any type of programmed step undertaken by components of the system.

If implemented in software, the functions described above may be stored on or transmitted over as one or more instructions or code on a computer-readable medium. The steps of a method or algorithm disclosed herein may be implemented in a processor-executable software module which may reside on a computer-readable medium. Computer-readable media includes both computer-readable storage media and communication media including any medium that can be enabled to transfer a computer program from one place to another. A storage media may be any available media that may be accessed by a computer. By way of example, and not limitation, such computer-readable media may include RAM, ROM, EEPROM, CD-ROM or other optical disk storage, magnetic disk storage or other magnetic storage devices, or any other medium that may be used to store desired program code in the form of instructions or data structures and that may be accessed by a computer. Also, any connection can be properly termed a computer-readable medium. Disk and disc, as used herein, includes compact disc (CD), laser disc, optical disc, digital versatile disc (DVD), floppy disk, and blu-ray disc where disks usually reproduce data magnetically, while discs reproduce data optically with lasers. Combinations of the above should also be included within the scope of computer-readable media. Additionally, the operations of a method or algorithm may reside as one or any combination or set of codes and instructions on a machine readable medium and computer-readable medium, which may be incorporated into a computer program product.

A person/one having ordinary skill in the art would further appreciate that any of the various illustrative logical blocks, modules, processors, means, circuits, and algorithm steps described in connection with the aspects disclosed herein may be implemented as electronic hardware (e.g., a digital implementation, an analog implementation, or a combination of the two, which may be designed using source coding or some other technique), various forms of program or design code incorporating instructions (which may be referred to herein, for convenience, as "software" or a "software module), or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system.

A microprocessor may be any conventional general purpose single- or multi-chip microprocessor such as a Pentium® processor, a Pentium® Pro processor, a 8051 processor, a MIPS® processor, a Power PC® processor, or an Alpha® processor. In addition, the microprocessor may be any conventional special purpose microprocessor such as a digital signal processor or a graphics processor. The microprocessor typically has conventional address lines, conventional data lines, and one or more conventional control lines.

The systems described above may be comprised of various modules as discussed in detail. As can be appreciated by one of ordinary skill in the art, each of the modules may comprise various hardware components, sub-routines, procedures, definitional statements, and macros. Each of the modules may be separately compiled and linked into a single executable program and the description of each of these modules is used for convenience to describe the functionality of the preferred system. Thus, any processes that are undergone by each of the modules may be arbitrarily redistributed to one of the other modules, combined together in a single module, or made available in, for example, a shareable dynamic link library.

The systems described above may be used in connection with various operating systems such as Linux®, UNIX® or Microsoft Windows®.

The systems described above may be written in any conventional programming language such as C, C++, BASIC, Pascal, or Java, and ran under a conventional operating system. C, C++, BASIC, Pascal, Java, and FORTRAN are industry standard programming languages for which many commercial compilers can be used to create executable code. The system may also be written using interpreted languages such as Perl, Python or Ruby.

A web browser comprising a web browser user interface may be used to display information (such as textual and graphical information) to a user. The web browser may comprise any type of visual display capable of displaying information received via a network. Examples of web browsers include Microsoft's Internet Explorer browser, Netscape's Navigator browser, Mozilla's Firefox browser, PalmSource's Web Browser, Apple's Safari, or any other browsing or other application software capable of communicating with a network.

The subject-matter disclosed herein may be implemented as a method, apparatus or article of manufacture using standard programming or engineering techniques to produce software, firmware, hardware, or any combination thereof. The term "article of manufacture" as used herein refers to code or logic implemented in hardware or non-transitory computer readable media such as optical storage devices, and volatile or non-volatile memory devices or transitory computer readable media such as signals, carrier waves, etc. Such hardware may include, but is not limited to, field programmable gate arrays (FPGAs), application-specific integrated circuits (ASICs), complex programmable logic devices (CPLDs), programmable logic arrays (PLAs), microprocessors, or other similar processing devices.

## Claims

1. A method of controlling a temperature differential between a first temperature and a second temperature in the generation of a three-dimensional object, the method comprising:
heating a volume of liquid in a reservoir to the first temperature;
transferring a portion of the volume of liquid from the reservoir to an object coater head;
controlling a transfer time for transferring the portion of the volume of liquid to the object coater head to allow the portion of the volume of liquid to be cooled to the second temperature;
cooling the portion of the volume of liquid to the second temperature; and
depositing from the object coater head the portion of the volume of liquid at the second temperature on one of a building area support and an already formed part of the three-dimensional object,
wherein the three-dimensional object is generated layer by layer by depositing successive layers of the liquid on one of the building area support and the already formed part of the three-dimensional object.

2. The method of Claim 1, wherein the portion of the volume of liquid is cooled during the transfer from the reservoir to the object coater head.

3. The method of Claim 2, wherein the temperature differential between the first temperature and the second temperature is controlled to increase the ability of the volume of liquid to dissolve air prior to being deposited from the object coater head.

4. The method of Claim 3, further comprising actively cooling the object coater head to allow the portion of the volume of liquid to be cooled to the second temperature.

5. The method of Claim 1, wherein the object coater head is configured to move in a relative manner in relation to the three-dimensional object.

6. An apparatus for generating a three-dimensional object, comprising:
a reservoir comprising a volume of liquid;
a heating source configured to heat the volume of liquid in the reservoir to a first temperature;
an object coater head configured to deposit a portion of the volume of liquid on one of a building area support and an already formed part of the three-dimensional object, wherein the object coater head is configured to generate the three-dimensional object layer by layer by depositing successive layers of the liquid on one of the building area support and the already formed part of the three-dimensional object; and
a controller configured to control a transfer time for transferring a portion of the volume of liquid from the reservoir to the object coater head so that the portion of the volume of liquid is allowed to cool to a second temperature for when the portion of the volume of liquid is deposited from the object coater head, wherein:
the first temperature is higher than the second temperature, and a temperature differential between the first temperature and the second temperature is controllable to increase the ability of the volume of liquid to dissolve air prior to being deposited from the object coater head.

7. The apparatus of Claim 6, further comprising a cooling source configured to actively cool the object coater head to allow the portion of the volume of liquid to be cooled to the second temperature.

8. The apparatus of Claim 6, further comprising a structure configured to guide a flow of the volume of liquid from the reservoir to a transport system.

9. The apparatus of Claim 6, further comprising at least one pump.

10. The apparatus of Claim 6, wherein the controller is configured to control an amount of the volume of liquid that flows from the reservoir to the object coater head.

11. The apparatus of Claim 6, wherein the object coater head is further configured to move in a relative manner in relation to the three-dimensional object.

## Patentansprüche

1. Ein Verfahren zur Steuerung eines Temperaturunterschieds zwischen einer ersten Temperatur und einer zweiten Temperatur bei der Herstellung eines dreidimensionalen Gegenstands, wobei das Verfahren folgendes umfasst:
Erhitzen eines Flüssigkeitsvolumens in einem Reservoir auf die erste Temperatur;
Überführen eines Teils des Flüssigkeitsvolumens vom Reservoir zu einem Gegenstand-Beschichterkopf;
Steuern einer Überführungszeit zum Überführen des Teils des Flüssigkeitsvolumens zum Gegenstand-Beschichterkopf, um es dem Teil des Flüssigkeitsvolumens zu ermöglichen, auf die zweite Temperatur abzukühlen;
Abkühlen des Teils des Flüssigkeitsvolumens auf die zweite Temperatur; und
Ablagern aus dem Gegenstand-Beschichterkopf des Teils des Flüssigkeitsvolumens auf der zweiten Temperatur entweder auf einem Bauflächenbereich oder auf einem bereits gebildeten Abschnitt des dreidimensionalen Gegenstands,
wobei der dreidimensionale Gegenstand Schicht für Schicht durch das Ablagern sukzessiver Schichten der Flüssigkeit entweder auf einem Bauflächenbereich oder auf einem bereits gebildeten Abschnitt des dreidimensionalen Gegenstands hergestellt wird.

2. Das Verfahren nach Anspruch 1, wobei der Teil des Flüssigkeitsvolumens während der Überführung vom Reservoir zum Gegenstand-Beschichterkopf abgekühlt wird.

3. Das Verfahren nach Anspruch 2, wobei der Temperaturunterschied zwischen der ersten Temperatur und der zweiten Temperatur gesteuert wird, um die Fähigkeit des Flüssigkeitsvolumens zum Lösen von Luft zu erhöhen, bevor es vom Gegenstand-Beschichterkopf abgelagert wird.

4. Das Verfahren nach Anspruch 3, darüber hinaus die aktive Kühlung des Gegenstand-Beschichterkopfes umfassend, um es dem Teil des Flüssigkeitsvolumens zu ermöglichen, auf die zweite Temperatur abgekühlt zu werden.

5. Das Verfahren nach Anspruch 1, wobei der Gegenstand-Beschichterkopf konfiguriert ist, um sich verhältnismäßig in Bezug zum dreidimensionalen Gegenstand zu bewegen.

6. Ein Gerät zum Herstellen eines dreidimensionalen Gegenstandes, folgendes umfassend:
ein Reservoir, ein Flüssigkeitsvolumen umfassend;
eine Heizquelle, die konfiguriert ist, um das Flüssigkeitsvolumen im Reservoir auf eine erste Temperatur zu erhitzen;
einen Gegenstand-Beschichterkopf, der konfiguriert ist, um einen Teil des Flüssigkeitsvolumens entweder auf einem Bauflächenbereich oder auf einem bereits gebildeten Abschnitt des dreidimensionalen Gegenstands abzulagern, wobei der Gegenstand-Beschichterkopf konfiguriert ist, um Schicht für Schicht durch das sukzessive Ablagern von Flüssigkeitsschichten entweder auf einem Bauflächenbereich oder auf einem bereits gebildeten Abschnitt des dreidimensionalen Gegenstands einen dreidimensionalen Gegenstand herzustellen; und
eine Steuerung, die konfiguriert ist, um eine Überführungszeit zum Überführen des Teils des Flüssigkeitsvolumens vom Reservoir zum Gegenstand-Beschichterkopf zu steuern, sodass es dem Teil des Flüssigkeitsvolumens ermöglicht wird, auf eine zweite Temperatur abzukühlen, wenn der Teil des Flüssigkeitsvolumens vom Gegenstand-Beschichterkopf abgelagert wird, wobei:
die erste Temperatur höher ist, als die zweite Temperatur, und ein Temperaturunterschied zwischen der ersten Temperatur und der zweiten Temperatur steuerbar ist, um die Fähigkeit des Flüssigkeitsvolumens zum Lösen von Luft zu erhöhen, bevor es vom Gegenstand-Beschichterkopf abgelagert wird.

7. Das Gerät nach Anspruch 6, darüber hinaus eine Kühlquelle umfassend, die konfiguriert ist, um den Gegenstand-Beschichterkopf aktiv abzukühlen, um es dem Teil des Flüssigkeitsvolumens zu ermöglichen, auf die zweite Temperatur abgekühlt zu werden.

8. Das Gerät nach Anspruch 6, darüber hinaus eine Struktur umfassend, die konfiguriert ist, um eine Strömung des Flüssigkeitsvolumens vom Reservoir in ein Transportsystem zu leiten.

9. Das Gerät nach Anspruch 6, darüber hinaus zumindest eine Pumpe umfassend.

10. Das Gerät nach Anspruch 6, wobei die Steuerung konfiguriert ist, um eine Menge des Flüssigkeitsvolumens zu steuern, das vom Reservoir zum Gegenstand-Beschichterkopf strömt.

11. Das Gerät nach Anspruch 6, wobei der Gegenstand-Beschichterkopf darüber hinaus konfiguriert ist, um sich verhältnismäßig in Bezug zum dreidimensionalen Gegenstand zu bewegen.

## Revendications

1. Un procédé de commande d'un différentiel de température entre une première température et une deuxième température lors de la production d'un objet en trois dimensions, le procédé comprenant :
le chauffage d'un volume de liquide dans un réservoir à la première température ;
le transfert d'une partie du volume de liquide du réservoir à une tête d'enduction d'objet ;
la commande d'un temps de transfert pour transférer la partie du volume de liquide à la tête d'enduction d'objet pour permettre à la partie du volume de liquide d'être refroidie à la deuxième température ;
le refroidissement de la partie du volume de liquide à la deuxième température; et
le dépôt de la partie du volume de liquide à la deuxième température depuis la tête d'enduction d'objet sur un parmi un support de zone de construction et une partie déjà formée de l'objet en trois dimensions,
dans lequel l'objet en trois dimensions est produit couche par couche par dépôt de couches successives du liquide sur un parmi le support de zone de construction et la partie déjà formée de l'objet en trois dimensions.

2. Le procédé selon la revendication 1, dans lequel la partie du volume de liquide est refroidie pendant le transfert du réservoir à la tête d'enduction d'objet.

3. Le procédé selon la revendication 2, dans lequel le différentiel de température entre la première température et la deuxième température est commandé pour augmenter l'aptitude du volume de liquide à dissoudre de l'air avant d'être déposé depuis la tête d'enduction d'objet.

4. Le procédé selon la revendication 3, comprenant en outre le refroidissement actif de la tête d'enduction d'objet pour permettre à la partie du volume de liquide d'être refroidie à la deuxième température.

5. Le procédé selon la revendication 1, dans lequel la tête d'enduction d'objet est configurée pour se déplacer d'une manière relative par rapport à l'objet en trois dimensions.

6. Un appareil de production d'un objet en trois dimensions, comprenant :
un réservoir comprenant un volume de liquide ;
une source de chauffage configurée pour chauffer le volume de liquide dans le réservoir à une première température ;
une tête d'enduction d'objet configurée pour déposer une partie du volume de liquide sur un parmi un support de zone de construction et une partie déjà formée de l'objet en trois dimensions, dans lequel la tête d'enduction d'objet est configurée pour produire l'objet en trois dimensions couche par couche par dépôt de couches successives du liquide sur un parmi le support de zone de construction et la partie déjà formée de l'objet en trois dimensions; et
un dispositif de commande configuré pour commander un temps de transfert pour transférer une partie du volume de liquide du réservoir à la tête d'enduction d'objet de sorte à permettre à la partie du volume de liquide de refroidir à une deuxième température lorsque la partie du volume de liquide est déposée depuis la tête d'enduction d'objet, dans lequel :
la première température est supérieure à la deuxième température, et un différentiel de température entre la première température et la deuxième température peut être commandé pour augmenter l'aptitude du volume de liquide à dissoudre de l'air avant d'être déposé depuis la tête d'enduction d'objet.

7. L'appareil selon la revendication 6, comprenant en outre une source de refroidissement configurée pour refroidir activement la tête d'enduction d'objet pour permettre à la partie du volume de liquide d'être refroidie à la deuxième température.

8. L'appareil selon la revendication 6, comprenant en outre une structure configurée pour guider un flux du volume de liquide du réservoir à un système de transport.

9. L'appareil selon la revendication 6, comprenant en outre au moins une pompe.

10. L'appareil selon la revendication 6, dans lequel le dispositif de commande est configuré pour commander une quantité du volume de liquide qui s'écoule du réservoir à la tête d'enduction d'objet.

11. L'appareil selon la revendication 6, dans lequel la tête d'enduction d'objet est configurée en outre pour se déplacer d'une manière relative par rapport à l'objet en trois dimensions.
